# EUROPEAN PATENT APPLICATION

(11) **EP 4 797 639 A1**
(43) Date of publication of application: **26.08.2026**
(21) Application number: 24887795.3
(22) Date of filing: 28.10.2024
(51) Int. Cl.: H04L 27/36

(54) **COMMUNICATION METHOD AND COMMUNICATION APPARATUS**

(30) Priority: 06.11.2023 CN 202311468930
(71) Applicant: HUAWEI TECHNOLOGIES CO., LTD., Shenzhen 518129 (CN)
(72) Inventor: TONG, Jiajie, Shenzhen, Guangdong 518129 (CN); WANG, Xianbin, Shenzhen, Guangdong 518129 (CN); ZHANG, Huazi, Shenzhen, Guangdong 518129 (CN); QIN, Kangjian, Shenzhen, Guangdong 518129 (CN); LIU, Ke, Shenzhen, Guangdong 518129 (CN); WANG, Jun, Shenzhen, Guangdong 518129 (CN)
(74) Representative: Pfenning, Meinig & Partner mbB
(86) International application number: PCT/CN2024/127788
(87) International publication number: WO 2025/098182

(57) **Abstract**

Embodiments of this application provide a communication method and a communication apparatus. The method includes: receiving indication information indicating a first index; determining a first value from a coding strategy set based on the first index, where the first value is spectral efficiency and/or a quantized value of the spectral efficiency, and the coding strategy set includes the first value and the first index; and sending a first codeword, where the first codeword is determined based on a quantity *N_{RE}* of resource elements RE and the first value, and *N_{RE}* is related to a to-be-sent symbol. In the method, the first value is determined from a plurality of groups of correspondences in the coding strategy set based on the first index, and the first codeword is determined and sent based on the first value and *N_{RE}.* The first codeword sent in this application is determined based on the first value and *N_{RE},* where the first value is from the coding strategy set, and the first codeword does not relate to a preconfigured modulation order. In other words, a system does not need to preconfigure a corresponding modulation order, thereby reducing operation complexity of the system.

## Description

This application claims priority to Chinese Patent Application No. 202311468930.5, entitled "COMMUNICATION METHOD AND COMMUNICATION APPARATUS", filed with the China National Intellectual Property Administration on November 6, 2023, which is incorporated herein by reference in its entirety.

### TECHNICAL FIELD

Embodiments of this application relate to the channel coding field, and more specifically, to a communication method and a communication apparatus.

### BACKGROUND

Modulation and coding scheme (modulation and coding scheme, MCS) is a commonly used technique in wireless communication. For example, before a terminal device sends an uplink data channel (for example, a physical uplink shared channel (physical uplink shared channel, PUSCH)) to a network device, the terminal device needs to determine an MCS used for the PUSCH. MCS indicates a modulation order (modulation order) and a coding rate (coding rate) that correspond to a data channel. The terminal device determines, based on MCS, a redundancy coding scheme and a modulation scheme that are used for data carried on the PUSCH. It can be learned that, in the existing MCS, the modulation order and the coding rate of the data channel in a communication process are preset in a system.

The existing MCS includes information like the modulation order and the coding rate corresponding to the modulation order that are pre-calculated by the system. Pre-calculating the modulation order by the system causes high operation complexity. In addition, because the modulation order is fixed, an ultra-low coding rate may occur in a coding and modulation process. Consequently, coding loss affects channel capacity allocation.

### SUMMARY

Embodiments of this application provide a communication method, to avoid pre-calculating a modulation order by a system, and reduce system complexity.

According to a first aspect, a communication method is provided. The method includes: receiving indication information, where the indication information indicates first indexes in a coding strategy set, the coding strategy set includes the first indexes and first values, the coding strategy set includes a plurality of groups of correspondences, each of the plurality of groups of correspondences is used to describe the first index and the first value, and the first value is spectral efficiency and/or a quantized value of the spectral efficiency; determining, based on the first index, the first value corresponding to the first index; and sending a first codeword, where the first codeword is determined based on a quantity *N_{RE}* of resource elements RE and the first value, and the quantity *N_{RE}* of resource elements is related to a to-be-sent symbol.

It should be understood that the coding strategy set includes the first index and the first value, and there is a correspondence between the first index and the first value. The coding strategy set includes the plurality of groups of correspondences, and each of the plurality of groups of correspondences is used to describe the first index and the first value.

According to the method in this application, the indication information is received, and the first value corresponding to the first index is determined based on the first index that is in a coding strategy and that is indicated by the indication information. The first codeword is determined and sent based on the first value and the quantity *N_{RE}* of resource elements RE. Compared with that in the conventional technology, in the method, information like a modulation order and a coding rate corresponding to an MCS index is determined from an MCS by using the MCS index, and further, the to-be-sent symbol is encoded based on the modulation order and the coding rate. The method provided in this application avoids that a system pre-calculates the modulation order, thereby reducing system complexity.

With reference to the first aspect, in some possible implementations, a quantity of information bits corresponding to the first codeword is related to the quantity *N_{RE}* of resource elements RE and a quantity of streams.

With reference to the first aspect, in some possible implementations, the quantity of information bits corresponding to the first codeword satisfies: ${N}_{info} = {N}_{RE} * {R}_{s} * v ,$ where
N_{RE} represents the quantity of resource elements RE, Rₛ is determined based on R and Qm, R represents a coding rate, Qm represents a quantity of bits in a modulation symbol, and v represents the quantity of streams.

With reference to the first aspect, in some possible implementations, that the first codeword is determined based on the quantity *N_{RE}* of resource elements RE and the first value includes:
the first codeword is determined based on the quantity *N_{RE}* of resource elements RE, the first value, and a second modulation order, the second modulation order is determined by adjusting a first modulation order M based on a third sequence, and the third sequence is determined based on the quantity *N_{RE}* of resource elements RE, a first sequence, and k non-pre-frozen bits, where
the first sequence corresponds to a quantity N of symbols and the first modulation order M, the resource element RE is configured to pre-freeze bits corresponding to (N-*N_{RE}*) symbols in the first sequence, to obtain a second sequence, and the third sequence is determined by selecting the k non-pre-frozen bits from the second sequence based on an order of reliability from high to low.

Based on the foregoing technical solution, the first codeword is determined based on the quantity *N_{RE}* of resource elements RE, the first value, and the second modulation order. The second scheduling order is obtained by adjusting the first scheduling order. The first scheduling order is a scheduling order of the first sequence that is preconfigured by a system. It can be learned that, in this application, the scheduling order used to determine the first codeword does not need to be pre-calculated by the system. The appropriate second scheduling order may be obtained by adjusting the first scheduling order that corresponds to the first sequence and that is preconfigured by the system, so that complexity of pre-calculation by the system is reduced, and it can be ensured that an appropriate scheduling order is selected to perform coding and modulation on the to-be-sent symbol, thereby improving encoding and decoding performance.

With reference to the first aspect, in some possible implementations, that the second modulation order is determined by adjusting the first modulation order M based on the third sequence includes:
m modulation orders corresponding to k first bits in the third sequence do not meet a first condition, the second modulation order is m' modulation orders, the m' modulation orders are modulation orders corresponding to k second bits in a fourth sequence, the m' modulation orders meet the first condition, where the fourth sequence is determined based on k information bits and m, the k second bits correspond to the k information bits, m' is less than m, the k first bits correspond to the k information bits, m is less than or equal to M, and m is a positive integer.

Based on the foregoing technical solution, the k information bits are respectively carried at bit positions corresponding to the k first bits in the third sequence. It is determined whether the m modulation orders corresponding to the k first bits meet the first condition, to further determine the second modulation order. When the m modulation orders do not meet the first condition, the fourth sequence is determined based on the k information bits and the modulation order m of the third sequence. The fourth sequence may be a sequence obtained by pre-freezing bit positions corresponding to a lowest layer or a highest layer of bit reliability in the m modulation orders of the third sequence, or the fourth sequence may be a sequence obtained by pre-freezing bit positions corresponding to a lowest layer or a highest layer of bit reliability in a modulation order corresponding to another sequence (for example, a fifth sequence). The k information bits correspond to k second bits in the fourth sequence, the k second bits correspond to the m' modulation orders in the fourth sequence, and the m' modulation orders meet the first condition. Further, m' is used as the second modulation order.

The fifth sequence may be a sequence obtained by pre-freezing bit positions corresponding to a lowest layer or a highest layer of bit reliability in the m modulation orders of the third sequence, or the fifth sequence may be a sequence obtained by pre-freezing bit positions corresponding to a lowest layer or a highest layer of bit reliability in a modulation order corresponding to another sequence (for example, a sixth sequence). A modulation order corresponding to the fifth sequence does not meet the first condition, and a modulation order corresponding to the sixth sequence does not meet the first condition.

With reference to the first aspect, in some possible implementations, that the fourth sequence is determined based on the k information bits and m includes:
The fourth sequence is obtained by pre-freezing bits corresponding to a lowest layer or a highest layer of bit reliability in m'' modulation orders in a fifth sequence, the fifth sequence is determined based on the k information bits and m, k third bits in the fifth sequence correspond to the k information bits, the k third bits correspond to the m'' modulation orders, and the m'' modulation orders do not meet the first condition, where
m'' is less than M, and m'' is a positive integer.

Based on the foregoing technical solution, the m' modulation orders corresponding to the fourth sequence meet the first condition. To be specific, before the sequence corresponding to the modulation order that meets the first condition is determined, whether the modulation order corresponding to the obtained sequence meets the first condition may be cyclically determined in the method. If the m' modulation orders corresponding to the fourth sequence do not meet the first condition, bits corresponding to a lowest layer or a highest layer of bit reliability corresponding to the sequence are pre-frozen, to obtain a new sequence. Then, a modulation order corresponding to the new sequence is determined until the modulation order meets the first condition. For example, the m' modulation orders corresponding to the fourth sequence meet the first condition, and m' is used as the second modulation order to perform coding and modulation on the to-be-sent symbol.

With reference to the first aspect, in some possible implementations, the first condition includes:
in modulation orders in which the k information bits are located, a quantity of information bits included in each modulation order is greater than or equal to a first threshold; and/or
the k information bits are located at bit positions corresponding to a same modulation order.

It should be understood that the first condition includes that the quantity of k information bits included in the bit position corresponding to each modulation order is greater than or equal to the first threshold, and/or the k information bits are on a same modulation order, for example, m'=1.

Based on the foregoing technical solution, an appropriate modulation order can be selected based on a code length and a coding rate corresponding to each modulation order by determining the first condition, to avoid a case in which channel capacity allocation is affected by a coding loss of a relatively low code rate, and improve encoding and decoding performance.

With reference to the first aspect, in some possible implementations, that the second modulation order is determined by adjusting the first modulation order M based on the third sequence includes:
m modulation orders corresponding to k first bits in the third sequence meet a first condition, and the second modulation order is the m modulation orders, where
the k first bits correspond to the k information bits, m is less than M, m is a positive integer, and the first condition includes: in modulation orders in which the k information bits are located, a quantity of information bits included in each modulation order is greater than or equal to a first threshold; and/or the k information bits are located at bit positions corresponding to a same modulation order.

Based on the foregoing technical solution, the k information bits are respectively carried at bit positions corresponding to the k first bits in the third sequence. It is determined whether the m modulation orders corresponding to the k first bits meet the first condition, to further determine the second modulation order. When the m modulation orders meet the first condition, m is used as the second modulation order.

With reference to the first aspect, in some possible implementations, when the first modulation order M is a modulation order of first quadrature amplitude modulation QAM, the first modulation order M is used to determine a quantity of constellation points of the first QAM, where the quantity of constellation points of the first QAM satisfies: *A* = 2^{2*M*}; and
when the second modulation order is a modulation order of second QAM, the second modulation order is used to determine a quantity of constellation points of the second QAM, and the quantity of constellation points of the second QAM satisfies: *a* = 2^{2∗the second modulation order}.

With reference to the first aspect, in some possible implementations, the plurality of groups of correspondences included in the coding strategy set correspond to one or more of the following entries:

| First index | Spectral efficiency x1024 | Spectral efficiency |
|---|---|---|
| 0 | 256 | 0.2500 |
| 1 | 320 | 0.3125 |
| 2 | 400 | 0.3906 |
| 3 | 496 | 0.4844 |
| 4 | 608 | 0.5938 |
| 5 | 736 | 0.7188 |
| 6 | 880 | 0.8594 |
| 7 | 1040 | 1.0156 |
| 8 | 1216 | 1.1875 |
| 9 | 1408 | 1.3750 |
| 10 | 1616 | 1.5781 |
| 11 | 1840 | 1.7969 |
| 12 | 2096 | 2.0469 |
| 13 | 2360 | 2.3047 |
| 14 | 2632 | 2.5703 |
| 15 | 2912 | 2.8438 |
| 16 | 3200 | 3.1250 |
| 17 | 3496 | 3.4141 |
| 18 | 3800 | 3.7109 |
| 19 | 4112 | 4.0156 |
| 20 | 4428 | 4.3242 |
| 21 | 4749 | 4.6367 |
| 22 | 5072 | 4.9531 |
| 23 | 5400 | 5.2734 |
| 24 | 5732 | 5.5977 |
| 25 | 6068 | 2.9258 |
| 26 | 6408 | 6.2578 |

According to a second aspect, a communication apparatus is provided. The communication apparatus includes: a transceiver unit, configured to receive indication information, where the indication information indicates first indexes in a coding strategy set, the coding strategy set includes the first indexes and first values, the coding strategy set includes a plurality of groups of correspondences, each of the plurality of groups of correspondences is used to describe the first index and the first value, and the first value is spectral efficiency and/or a quantized value of the spectral efficiency, and a processing unit, configured to determine, based on the first index, the first value corresponding to the first index, where the transceiver unit is further configured to send a first codeword, where the first codeword is determined based on a quantity *N_{RE}* of resource elements RE and the first value, and the quantity *N_{RE}* of resource elements is related to a to-be-sent symbol.

It should be understood that the transceiver unit is also referred to as a communication unit.

With reference to the second aspect, in some possible implementations, a quantity of information bits corresponding to the first codeword is related to the quantity *N_{RE}* of resource elements RE and a quantity of streams.

With reference to the second aspect, in some possible implementations, the quantity of information bits corresponding to the first codeword satisfies: ${N}_{info} = {N}_{RE} * {R}_{s} * v ,$ where
N_{RE} represents the quantity of resource elements RE, Rₛ is determined based on R and Qm, R represents a coding rate, Qm represents a quantity of bits in a modulation symbol, and v represents the quantity of streams.

With reference to the second aspect, in some possible implementations, that the first codeword is determined based on the resource element RE and the first value includes:
The first codeword is determined based on the quantity *N_{RE}* of resource elements RE, the first value, and a second modulation order, the second modulation order is determined by adjusting a first modulation order M based on a third sequence, and the third sequence is determined based on the quantity *N_{RE}* of resource elements RE, a first sequence, and k non-pre-frozen bits, where
the first sequence corresponds to a quantity N-*N_{RE}* of symbols and a first modulation order M, the resource element RE is configured to pre-freeze bits corresponding to N symbols in the first sequence, to obtain a second sequence, and the third sequence is determined by selecting the k non-pre-frozen bits from the second sequence based on an order of reliability from high to low.

With reference to the second aspect, in some possible implementations, that the second modulation order is determined by adjusting the first modulation order M based on the third sequence includes:
m modulation orders corresponding to k first bits in the third sequence do not meet a first condition, the second modulation order is m' modulation orders, the m' modulation orders are modulation orders corresponding to k second bits in a fourth sequence, and the m' modulation orders meet the first condition, where
the fourth sequence is determined based on the k information bits and m, the k second bits correspond to the k information bits, m' is less than m, the k first bits correspond to the k information bits, m is less than or equal to M, and m is a positive integer.

With reference to the second aspect, in some possible implementations, that the fourth sequence is determined based on the k information bits and m includes:
The fourth sequence is obtained by pre-freezing bits corresponding to a lowest layer or a highest layer of bit reliability in m'' modulation orders in a fifth sequence, the fifth sequence is determined based on the k information bits and m, k third bits in the fifth sequence correspond to the k information bits, the k third bits correspond to the m'' modulation orders, and the m'' modulation orders do not meet the first condition, where
m'' is less than M, and m'' is a positive integer.

With reference to the second aspect, in some possible implementations, the first condition includes:
In modulation orders in which the k information bits are located, a quantity of information bits included in each modulation order is greater than or equal to a first threshold; and/or
the k information bits are located at bit positions corresponding to a same modulation order.

With reference to the second aspect, in some possible implementations, that the second modulation order is determined by adjusting the first modulation order M based on the third sequence includes:
m modulation orders corresponding to k first bits in the third sequence meet a first condition, and the second modulation order is the m modulation orders, where
the k first bits correspond to the k information bits, m is less than M, m is a positive integer, and the first condition includes: in modulation orders in which the k information bits are located, a quantity of information bits included in each modulation order is greater than or equal to a first threshold; and/or the k information bits are located at bit positions corresponding to a same modulation order.

With reference to the second aspect, in some possible implementations, that the second modulation order is determined by adjusting the first modulation order M based on the third sequence includes:
When m modulation orders corresponding to k first bits in the third sequence meet a first condition, m is used as the second modulation order, where
the k first bits correspond to the k information bits, m is less than M, m is a positive integer, and the first condition includes: in modulation orders in which the k information bits are located, a quantity of information bits included in each modulation order is greater than or equal to a first threshold; and/or the k information bits are located at bit positions corresponding to a same modulation order.

With reference to the second aspect, in some possible implementations, when the first modulation order M is a modulation order of first quadrature amplitude modulation QAM, the first modulation order M is used to determine a quantity of constellation points of the first QAM, where the quantity of constellation points of the first QAM satisfies: *A* = 2^{2*M*}; and
when the second modulation order is a modulation order of second QAM, the second modulation order is used to determine a quantity of constellation points of the second QAM, and the quantity of constellation points of the second QAM satisfies: *a* = 2^{2∗the second modulation order}.

With reference to the second aspect, in some possible implementations, the plurality of groups of correspondences included in the coding strategy set correspond to one or more of the following entries:

| First index | Spectral efficiency x1024 | Spectral efficiency |
|---|---|---|
| 0 | 256 | 0.2500 |
| 1 | 320 | 0.3125 |
| 2 | 400 | 0.3906 |
| 3 | 496 | 0.4844 |
| 4 | 608 | 0.5938 |
| 5 | 736 | 0.7188 |
| 6 | 880 | 0.8594 |
| 7 | 1040 | 1.0156 |
| 8 | 1216 | 1.1875 |
| 9 | 1408 | 1.3750 |
| 10 | 1616 | 1.5781 |
| 11 | 1840 | 1.7969 |
| 12 | 2096 | 2.0469 |
| 13 | 2360 | 2.3047 |
| 14 | 2632 | 2.5703 |
| 15 | 2912 | 2.8438 |
| 16 | 3200 | 3.1250 |
| 17 | 3496 | 3.4141 |
| 18 | 3800 | 3.7109 |
| 19 | 4112 | 4.0156 |
| 20 | 4428 | 4.3242 |
| 21 | 4749 | 4.6367 |
| 22 | 5072 | 4.9531 |
| 23 | 5400 | 5.2734 |
| 24 | 5732 | 5.5977 |
| 25 | 6068 | 2.9258 |
| 26 | 6408 | 6.2578 |

According to a third aspect, a communication apparatus is provided. The communication apparatus has a function of implementing the method according to any one of the first aspect or the possible implementations of the first aspect. The function may be implemented by hardware, or may be implemented by hardware executing corresponding software. The hardware or the software includes one or more units corresponding to the functions.

According to a fourth aspect, a communication apparatus is provided, and includes a processor and a memory. Optionally, the communication apparatus may further include a transceiver. The memory is configured to store a computer program, and the processor is configured to: invoke and run the computer program stored in the memory, and control the transceiver to receive and send a signal, to enable the communication apparatus to perform the method according to any one of the first aspect or the possible implementations of the first aspect.

According to a fifth aspect, a communication apparatus is provided, and includes a processor and a communication interface. The communication interface is configured to: receive data and/or information, and transmit the received data and/or information to the processor, the processor processes the data and/or information, and the communication interface is further configured to output data and/or information obtained through processing by the processor, so that the method according to any one of the first aspect or the possible implementations of the first aspect is performed.

According to a sixth aspect, a computer-readable storage medium is provided. The computer-readable storage medium stores computer instructions, and when the computer instructions are run on a computer, the method according to any one of the first aspect or the possible implementations of the first aspect is performed.

According to a seventh aspect, a computer program product is provided. The computer program product includes computer program code. When the computer program code is run on a computer, the method according to the first aspect or any one of the possible implementations of the first aspect is performed.

### BRIEF DESCRIPTION OF DRAWINGS

FIG. 1 is a diagram of a system architecture of a communication system applicable to technical solutions of this application;
FIG. 2A and FIG. 2B are diagrams of modulated signals;
FIG. 3 is a diagram of an MLC procedure of m-order modulation;
FIG. 4 is a diagram of simulation of serial demodulation and parallel demodulation;
FIG. 5 is a schematic flowchart of a communication method according to an embodiment of this application;
FIG. 6A and FIG. 6B are a schematic flowchart of determining a modulation order according to this application;
FIG. 7 is a diagram of simulation of BLER=0.01;
FIG. 8 is a block diagram of a communication apparatus 800 according to this application; and
FIG. 9 is a diagram of a structure of a communication apparatus 900 according to this application.

### DESCRIPTION OF EMBODIMENTS

The following describes technical solutions of this application with reference to accompanying drawings.

The technical solutions in embodiments of this application may be applied to various communication systems, including but not limited to a satellite communication system, a 5th generation (5th generation, 5G) system, a long term evolution (long term evolution, LTE) system (LTE frequency division duplex (frequency division duplex, FDD) system, an LTE time division duplex (time division duplex, TDD) system), and the like. The technical solutions provided in this application may be further applied to a future communication system, for example, a 6th generation mobile communication system. In addition, the technical solutions may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, another communication system, and the like. This is not limited in this specification.

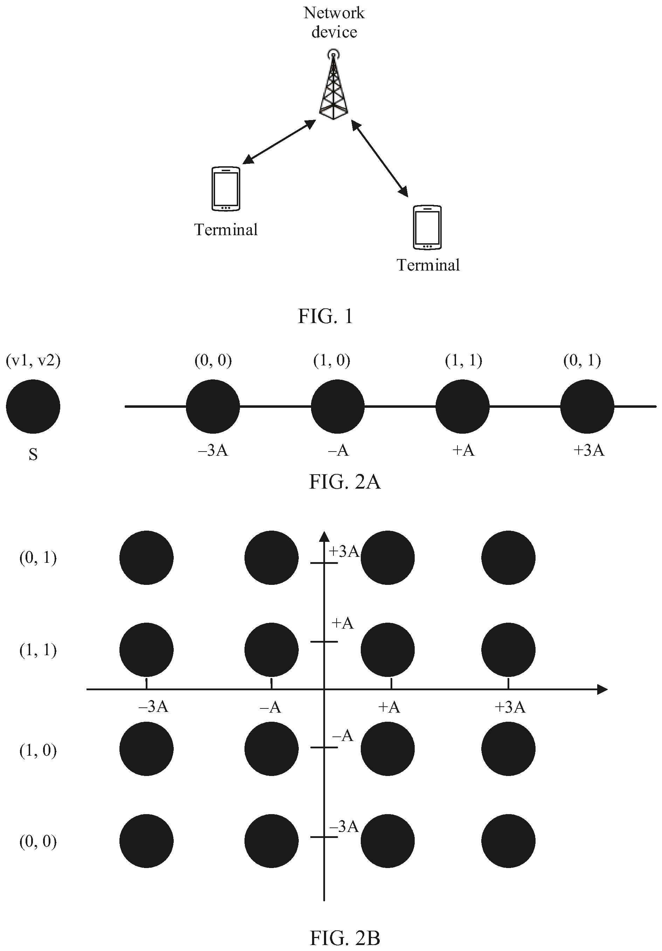

FIG. 1 is a diagram of a system architecture of a communication system applicable to technical solutions of this application. The communication system may include one or more network devices and one or more terminal devices.

For example, the terminal device may also be referred to as a user equipment (user equipment, UE), an access terminal, a subscriber unit, a subscriber station, a mobile station, a mobile terminal (mobile terminal, MT), a remote station, a remote terminal, a mobile device, a user terminal, a terminal, a wireless communication device, a user agent, or a user apparatus. The terminal device in embodiments of this application may be a device that provides voice and/or data connectivity for a user, and may be configured to connect a person, an object, and a machine, for example, a handheld device or a vehicle-mounted device having a wireless connection function. The terminal device in embodiments of this application may be a mobile phone (mobile phone), a tablet (pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. Optionally, the UE may serve as a base station. For example, the UE may serve as a scheduling entity that provides a sidelink signal between UEs in V2X, D2D, or the like.

In embodiments of this application, an apparatus configured to implement a function of the terminal may be the terminal, or may be an apparatus that can support the terminal in implementing the function, for example, a chip system or a chip. The apparatus may be installed on the terminal. In this embodiment of this application, the chip system may include a chip, or may include a chip and another discrete component.

For example, the network device may be a device having a wireless transceiver function. The network device may be a device providing a wireless communication function service, and is usually located on a network side, including but not limited to a next generation NodeB (gNodeB, gNB) in a 5th generation (5th generation, 5G) communication system, a base station in a 6th generation (6th generation, 6G) mobile communication system, a base station in a future mobile communication system, an access node in a wireless fidelity (wireless fidelity, Wi-Fi) system, an evolved NodeB (evolved NodeB, eNB) in a long term evolution (long term evolution, LTE) system, a radio network controller (radio network controller, RNC), a NodeB (NodeB, NB), a base station controller (base station controller, BSC), a home base station (for example, a home evolved NodeB or a home NodeB, HNB), a baseband unit (baseband unit, BBU), a transmission reception point (transmission reception point, TRP), a transmitting point (transmitting point, TP), a base transceiver station (base transceiver station, BTS), and the like. In a network structure, the network device may include a central unit (central unit, CU) node, a distributed unit (distributed unit, DU) node, a RAN device including a CU node and a DU node, or a RAN device including a CU-control plane node, a CU-user plane node, and a DU node. Alternatively, the network device may be a radio controller, a relay station, a vehicle-mounted device, a wearable device, and the like in a cloud radio access network (cloud radio access network, CRAN) scenario. In addition, the base station may be a macro base station, a micro base station, a relay node, a donor node, or a combination thereof. The base station may alternatively be a communication module, a modem, or a chip that is disposed in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks using a same access technology or different access technologies. This is not limited.

In embodiments of this application, an apparatus configured to implement a function of the network device may be the network device, or may be an apparatus that can support the network device in implementing the function, for example, a chip system or a chip. The apparatus may be installed in the network device. In this embodiment of this application, the chip system may include a chip, or may include a chip and another discrete component.

It should be understood that the rate matching method provided in this application may be considered as a channel coding scheme, may be applied to a dedicated network device or a general-purpose device, and may be applied to various network devices (for example, a base station device) described above, or may be applied to various terminal devices described above. Specifically, the channel coding scheme is mainly implemented by a channel coding unit in these devices.

The method provided in embodiments of this application may be alternatively implemented by using an application-specific integrated circuit (application-specific integrated circuit, ASIC), a field programmable gate array (field programmable gate array, FPGA), or the like, or may be implemented by using software (for example, program code in a memory). This is not limited.

FIG. 2A and FIG. 2B are diagrams of modulated signals. FIG. 2A is a 4-PAM signal, and FIG. 2B is a 16-QAM signal. It can be learned that, after a signal is extended to a two-dimensional plane, a maximum of 2log2(M) information bits may be transmitted each time an M2-QAM symbol is sent.

To facilitate understanding of embodiments provided in this application, the following briefly describes terms used in this application.

### Multi-level coding (multi-level coding, MLC)

MLC is a modulation technology that combines coding and modulation. MLC neither increases a signal bandwidth nor reduces an actual data transmission rate, and can improve reliability of data transmission. Therefore, MLC is also referred to as "efficient bandwidth coding".

According to the Shannon channel capacity theorem, when a coding rate of each level of component code in the MLC is equal to an equivalent channel capacity of each level of channel, a better bit error rate and throughput performance can be obtained by using the MLC technology. Therefore, a design of the MLC technology focuses on appropriate selection of a coding rate of a component code. A coding rate of a conventional linear block code is relatively fixed. In general, only limited types of coding rates are available for selection, and it is difficult to match coding rates of block codes with equivalent channel capacities in different channel conditions. Different from the linear block code, a rateless code can theoretically generate any plurality of groups of encoded symbols based on a same group of information for sending, thereby implementing continuous adjustment of the coding rate. It is clear that compared with the linear block code, the rateless code is more likely to obtain a coding rate close to a channel capacity, thereby obtaining a larger throughput and a lower bit error rate.

It should be understood that, in the MLC, a string of modulation symbols are divided into m layers based on different capacities of modulated bits (bits) in the symbols, and each layer is independently encoded.

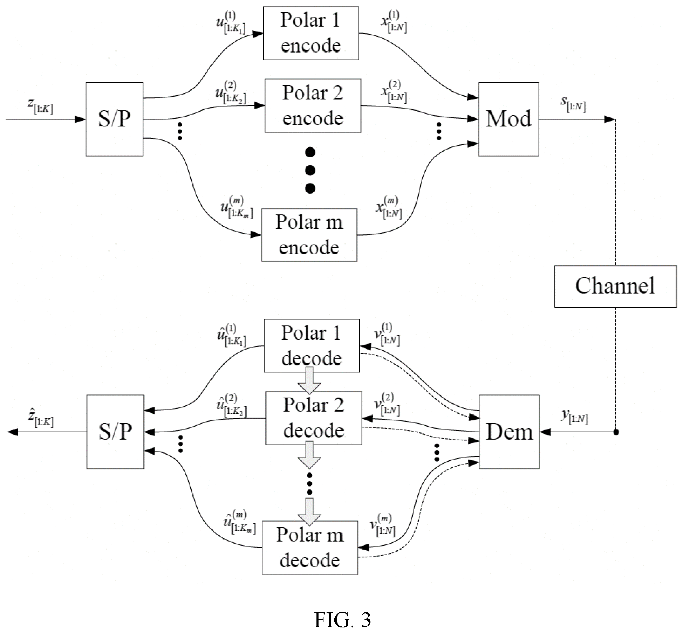

FIG. 3 is a diagram of an MLC procedure of m-order modulation. In FIG. 3, encoding is described by using a polar polar code as an example. For example, for m-order modulation, serial-to-parallel conversion is first performed on a to-be-transmitted information bit stream z, and the information bit stream is divided into m bit streams u₁,u₂,u₃...u*ₘ* . Each bit stream corresponds to a bit channel under high-order modulation, and polar coding is separately performed on the bit channel. That is, a codeword *x*₁ output by an m^{th} encoder forms an m^{th} bit in a high-order modulation symbol. N modulated symbols generated by a modulator (Mod) are sent to a channel for transmission. A demodulator (Dem) obtains, through demodulation, a soft value *v*₁ required by a first polar decoder from a channel receiving sequence y, and then the polar decoder obtains u₁ through decoding by using the soft value sequence *v*₁ corresponding to a first stream. To obtain, through demodulation, a soft value *v₂* corresponding to a second stream, a polar code codeword *x*₁ corresponding to u₁ needs to be input to the demodulator. The demodulator obtains, through demodulation, the soft value sequence *v*₂ corresponding to the second stream by using y and *x*₁ , and inputs the soft value sequence to a second polar code decoder. The second polar code decoder obtains u₂ through decoding by using the soft value sequence, and then the demodulator obtains, through demodulation, a soft value sequence *v*₃ corresponding to a third stream by using the channel receiving sequence y and codewords *x*₂ and *x*₁ corresponding to u₂ and u₁. The rest may be deduced by analogy. The channel receiving sequence y and codewords *x*₁ to *xₘ* of m*-*1 polar codes before an m^{th} stream need to be used to demodulate the m^{th} stream.

It can be learned that the MLC uses serial demodulation, and the MLC needs m encoders and m decoders.

Demodulation refers to a process of converting a modulation symbol (for example S₁, S₂, S₃...S*ₘ* ) into a corresponding bit sequence (for example V₁, V₂, V₃...V*ₘ* ). Demodulation schemes may be classified into serial demodulation and parallel demodulation.

The following separately describes a serial demodulation scheme and a parallel demodulation scheme by using one 4-PAM symbol as an example. It is assumed that one 4-PAM symbol s corresponds to two bits (v₁, v₂), and a symbol received by a decoder after s passes through an AWGN channel is y.

### (1) Serial demodulation

To obtain a value of v₁, a probability P(v₁ = 0|y) of v₁=0 and a probability P(v₁ = 1|y) of v₁=1 are derived from y, and the value of v₁ is determined according to the following formula (1): $\left\{\begin{matrix}If log \left(\frac{P \left({v}_{1}=\left.0\right|y\right)}{P \left({v}_{1}=\left.1\right|y\right)}\right) \geq 0 , {v}_{1} = 0 \\ Otherwise , {v}_{1} = 1\end{matrix}\right.$

Herein, $P \left({v}_{1}=\left.0\right|y\right) = \frac{1}{2} \times \left[P\left(\left.{S}_{v 1 = 0 , v 2 = 0}\right|y\right)+P\left(\left.{S}_{v 1 = 0 , v 2 = 1}\right|y\right)\right] =$ $\frac{1}{2} \times \left[\frac{1}{\sqrt{2 {πσ}^{2}}}exp\left(-\frac{{\left(y-{s}_{ν 1 = 0 , ν 2 = 0}\right)}^{2}}{2 {σ}^{2}}\right)+\frac{1}{\sqrt{2 {πσ}^{2}}}exp\left(-\frac{{\left(y-{s}_{ν 1 = 0 , ν 2 = 1}\right)}^{2}}{2 {σ}^{2}}\right)\right]$.

Similarly, $P \left({v}_{1}=\left.1\right|y\right) = \frac{1}{2} \times \left[P\left(\left.{S}_{v 1 = 1 , v 2 = 0}\right|y\right)+P\left(\left.{S}_{v 1 = 1 , v 2 = 1}\right|y\right)\right] =$ $\frac{1}{2} \times \left[\frac{1}{\sqrt{2 {πσ}^{2}}}exp\left(-\frac{{\left(y-{s}_{ν 1 = 1 , ν 2 = 0}\right)}^{2}}{2 {σ}^{2}}\right)+\frac{1}{\sqrt{2 {πσ}^{2}}}exp\left(-\frac{{\left(y-{s}_{ν 1 = 1 , ν 2 = 1}\right)}^{2}}{2 {σ}^{2}}\right)\right]$

According to the 4-PAM example given in FIG. 2A, when the probabilities P(v₁ = 0|y) and P(v₁=1|y) are calculated, S₀₀=-3A, S₁₀=-A, S₁₁=+A, and S₀₁=+3A. To ensure that an average transmit power Eₛ=1, that is, 1/4*(|S₀₀|²+|S₁₀|²+|S₁₁|²+|S₀₁|²)=1, $A = \frac{1}{\sqrt{5}}$. Then, the value of v₁ may be obtained by using the foregoing formula (1).

To obtain a value of v₂, a probability P(v₂ = 0|y, v₁)) of v₂=0 and a probability P(v₂ = 1|y, v₁) of v₂=1 need to be calculated in serial demodulation under a condition that a value of v₁ is given, then a log likelihood ratio of the foregoing two probabilities is calculated, and then the value of v₂ is obtained according to the formula (2): $\left\{\begin{matrix}If log \left(\frac{P \left({v}_{2}=\left.0\right|y, {v}_{1}\right)}{P \left({v}_{2}=\left.1\right|y, {v}_{1}\right)}\right) \geq 0 , {v}_{2} = 0 \\ Otherwise , {v}_{2} = 1\end{matrix}\right.$

If v₁ = 0, $P \left(\left.{v}_{2}=0\right|y, {v}_{1}\right) = P \left(\left.{S}_{v 1 = 0 , v 2 = 0}\right|y\right) = \frac{1}{\sqrt{2 {πσ}^{2}}} exp \left(-\frac{{\left(y-{s}_{ν 1 = 0 , ν 2 = 0}\right)}^{2}}{2 {σ}^{2}}\right) ;$ and $P \left(\left.{v}_{2}=1\right|y, {v}_{1}\right) = P \left(\left.{S}_{v 1 = 0 , v 2 = 1}\right|y\right) = \frac{1}{\sqrt{2 {πσ}^{2}}} exp \left(-\frac{{\left(y-{s}_{v 1 = 0 , v 2 = 1}\right)}^{2}}{2 {σ}^{2}}\right) .$

If v₁ = 1, $P \left(\left.{v}_{2}=1\right|y, {v}_{1}\right) = P \left(\left.{S}_{v 1 = 1 , v 2 = 0}\right|y\right) = \frac{1}{\sqrt{2 {πσ}^{2}}} exp \left(-\frac{{\left(y-{s}_{v 1 = 1 , v 2 = 0}\right)}^{2}}{2 {σ}^{2}}\right) ;$ and $P \left(\left.{v}_{2}=1\right|y, {v}_{1}\right) = P \left(\left.{S}_{v 1 = 1 , v 2 = 1}\right|y\right) = \frac{1}{\sqrt{2 {πσ}^{2}}} exp \left(-\frac{{\left(y-{s}_{v 1 = 1 , v 2 = 1}\right)}^{2}}{2 {σ}^{2}}\right) .$

Therefore, probabilities P(v₂ = 0|y, v₁) and P(v₂ = 1|y, v₁) may be calculated, and then v₂ may be obtained through serial demodulation according to the foregoing formula (2).

### (2) Parallel demodulation

A process of calculating v₁ is the same as a process of calculating v₁ in the serial demodulation in (1). For details, refer to the foregoing description.

In a process of calculating v₂, a value of v₁ does not need to be used in parallel demodulation, but all possible values of v₁ are averaged, and a value 0 of v₂ is determined according to the following formula (3): $\left\{\begin{matrix}If log \left(\frac{P \left(\left.{v}_{2}=0\right|y\right)}{P \left(\left.{v}_{2}=1\right|y\right)}\right) \geq 0 , & {v}_{2} = 0 \\ Otherwise , & {v}_{2} = 1\end{matrix}\right.$

Herein, $P \left(\left.{v}_{2}=0\right|y\right) = \frac{1}{2} \times \left[P\left(\left.{S}_{v 1 = 0 , v 2 = 0}\right|y\right)+P\left(\left.{S}_{v 1 = 1 , v 2 = 0}\right|y\right)\right] =$ $\frac{1}{2} \times \left[\frac{1}{\sqrt{2 {πσ}^{2}}}exp\left(-\frac{{\left(y-{s}_{v 1 = 0 , v 2 = 0}\right)}^{2}}{2 {σ}^{2}}\right)+\frac{1}{\sqrt{2 {πσ}^{2}}}exp\left(-\frac{{\left(y-{s}_{v 1 = 1 , v 2 = 0}\right)}^{2}}{2 {σ}^{2}}\right)\right]$.

Similarly, $P \left(\left.{v}_{2}=1\right|y\right) = \frac{1}{2} \times \left[P\left(\left.{S}_{v 1 = 0 , v 2 = 1}\right|y\right)+P\left(\left.{S}_{v 1 = 1 , v 2 = 1}\right|y\right)\right] =$ $\frac{1}{2} \times \left[\frac{1}{\sqrt{2 {πσ}^{2}}}exp\left(-\frac{{\left(y-{s}_{v 1 = 0 , v 2 = 1}\right)}^{2}}{2 {σ}^{2}}\right)+\frac{1}{\sqrt{2 {πσ}^{2}}}exp\left(-\frac{{\left(y-{s}_{v 1 = 1 , v 2 = 1}\right)}^{2}}{2 {σ}^{2}}\right)\right]$

It can be learned that, in serial demodulation, the value of v₁ needs to be first estimated based on the received symbol y, and then the value of v₂ is further estimated based on the estimated value of v₁ and y. An only difference between parallel demodulation and serial demodulation is that, in parallel demodulation, the estimated value of v₁ is not required when v₂ is calculated. Therefore, v₁ and v₂ may be obtained at the same time, and may be achieved in parallel.

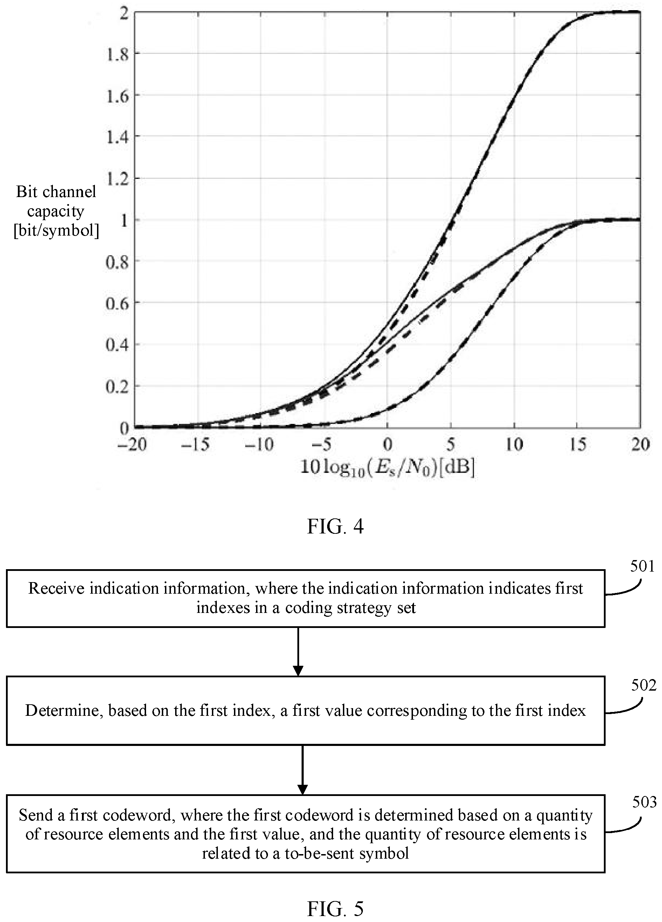

It should be understood that both serial demodulation and parallel demodulation may be considered as a process of converting a high-order modulation channel including 2^{m} symbols into m bit channels. For example, 4-PAM is used as an example, and a channel capacity of the modulation channel is I (Y;V₁,V₂). In serial demodulation, the modulation channel is decomposed into two bit channels, where a capacity of a first bit channel is I (Y;V₁), and a capacity of a second bit channel is I (Y;V₂|V₁). It may be proved that I (Y;V₁,V₂)=I (Y;V₁)+I (Y;V₂|V₁), that is, serial demodulation does not cause a capacity loss. As shown by solid lines in FIG. 4, a first solid line from bottom to top is the bit channel capacity I (Y;V₁) of V₁, a second solid line is the bit channel capacity I (Y;V₂|V₁) of V₂, and a third solid line from bottom to top is the modulation channel capacity I (Y;V₁,V₂) in serial demodulation. In parallel demodulation, the modulation channel is also decomposed into two bit channels, where a capacity of a first bit channel is I (Y;V₁), but a capacity of a second bit channel is I (Y;V₂). Because I (Y;V₁,V₂)>=I (Y;V₁)+1 (Y;V₂), parallel demodulation causes a specific capacity loss. As shown by dashed lines in FIG. 4, a first dashed line from bottom to top is the bit channel capacity I (Y;V₁) of V_{I}, a second dashed line is the bit channel capacity I (Y;V₂) of V₂, and a third dashed line is the modulation channel capacity I (Y;V₁)+I (Y;V₂) in parallel demodulation. It can be learned that parallel demodulation causes a specific capacity loss compared with serial demodulation. However, because parallel demodulation is easy to be implemented and can be parallelized, the parallel demodulation scheme is generally used currently.

A modulation and coding scheme (modulation and coding scheme, MCS) is a common technology in wireless communication technologies. For example, before a terminal device sends an uplink data channel (for example, a physical uplink shared channel (physical uplink shared channel, PUSCH)) to a network device, the terminal device needs to determine an MCS used for the PUSCH. The MCS indicates a modulation order (modulation order) and a coding rate (coding rate) that correspond to the data channel. The terminal device determines, based on the MCS, a redundancy coding scheme and a modulation scheme that are used for data carried on the PUSCH. It can be learned that, in the existing MCS, the modulation order and the coding rate of the data channel in the communication process are specified.

The MCS defines a quantity of valid bits that may be carried by one resource element (resource element, RE). The MCS may include MCS schemes 0 to 31, and MCS schemes 29 to 31 are used as reserved bits. A higher index of the MCS indicates a larger quantity of valid bits that can be carried. The MCS defines two parts: a modulation order and a coding rate.

The modulation order corresponds to a modulation scheme. The optional modulation schemes supported by 5G NR include QPSK, 16QAM, 64QAM, and 256QAM. When QPSK is used as the modulation scheme, 2 bits of information may be transmitted on each RE. When 16QAM is used as the modulation scheme, 4 bits of information may be transmitted on each RE. When 64QAM is used as the modulation scheme, 6 bits of information may be transmitted on each RE. When 256QAM is used as the modulation scheme, 8 bits of information may be transmitted on each RE.

The coding rate represents a ratio of a quantity of useful bits to a total quantity of transmitted bits, where the total quantity of transmitted bits includes the useful bits and redundant bits. The coding rate is mainly used to measure redundancy added at a physical layer. Redundant bits are used for forward error correction

The following describes an example of an MCS table. As shown in Table 1, the MCS table includes four columns, which are respectively an MCS index, a modulation order, a coding rate x1024, and spectral efficiency.

**Table 1**

| MCS index | Modulation order | Coding rate x1024 | Spectral efficiency |
|---|---|---|---|
| 0 | 2 | 120 | 0.2344 |
| 1 | 2 | 157 | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 438 | 2.5664 |
| 18 | 6 | 466 | 2.7305 |
| 19 | 6 | 517 | 3.0293 |
| 20 | 6 | 567 | 3.3223 |
| 21 | 6 | 616 | 3.6094 |
| 22 | 6 | 666 | 3.9023 |
| 23 | 6 | 719 | 4.2129 |
| 24 | 6 | 772 | 4.5234 |
| 25 | 6 | 822 | 4.8164 |
| 26 | 6 | 873 | 5.1152 |
| 27 | 6 | 910 | 5.3320 |
| 28 | 6 | 948 | 5.5547 |
| 29 | 2 | Reserved | |
| 30 | 4 | Reserved | |
| 31 | 6 | Reserved | |

It can be learned that a highest-order modulation order in the MCS table shown in Table 1 is 6, that is, a highest-order modulation scheme is 64QAM. Certainly, when the modulation orders in Table 1 are 2 and 4, corresponding modulation schemes are QPSK and 16QAM, respectively.

As shown in Table 1, a first column is an MCS index number, and 29 to 31 are reserved bits. A second column is a modulation order, and represents a specific modulation scheme to be used. A value in the second column may be represented as *Qₘ*, where when *Qₘ* = 2, it represents that a modulation order of 2² = 4 is used, that is, QPSK; when *Qₘ* = 4, it represents that a modulation order of 2⁴ = 16 is used, that is, 16QAM; or when *Qₘ* = 6 , it represents that a modulation order of 2⁶ = 64 is used, that is, 64QAM. A third column is a coding rate (or referred to as a target coding rate), and represents a coding rate expected to be reached after a modulation scheme and corresponding redundancy that correspond to an MCS index are selected. A fourth column is spectral efficiency, indicating frequency efficiency corresponding to this MCS index. The coding rate in Table 1 is positively correlated with the spectral efficiency. In other words, higher spectral efficiency indicates a higher coding rate.

It should be understood that the MCS is determined by the network device based on a link adaptation algorithm, and a specific MCS to be selected usually depends on quality of a radio link. Better quality of the radio link indicates a higher MCS index, that is, a larger quantity of useful bits transmitted in one symbol. Correspondingly, poorer quality of the radio link indicates that only an MCS with a low MCS index can be selected, that is, a smaller quantity of useful bits transmitted in one symbol. The network device may select an MCS based on a block error rate (block error rate, BLER). Generally, a BLER threshold equal to 10% is defined. The network device uses the link adaptation algorithm to allocate the MCS, so that the BLER does not exceed the threshold under different radio conditions.

In 3GPP, a related standard protocol is specified, and an MCS table is provided for the PDSCH for selection of the network device. The MCS table includes a 64QAM table, a 256QAM table, and a low spectral efficiency 64QAM table. The 64QAM table (for example, Table 1): The 64QAM table may be used when the network device or the terminal device does not support 256QAM or the channel quality of the radio link is poor, the 256QAM table fails to be decoded, and the network device needs to perform modulation by using the QPSK. The 256QAM table: The 256QAM table may be used when a channel status of the radio link is good, and the network device and the terminal device support 256QAM. The low spectral efficiency 64QAM table: The low spectral efficiency 64QAM table is applicable to an application that requires reliable data transmission, for example, an application of a URLLC type. In an MCS of this table, channel coding redundancy is increased by reducing the coding rate, so as to improve channel reliability. Therefore, spectral efficiency is low.

For the 256QAM table and the low spectral efficiency 64QAM table, refer to the conventional technology. Details are not described herein again.

Based on the foregoing existing MCS, each MCS index corresponds to a fixed modulation order and a target coding rate. Because the modulation order is fixed, the modulation order cannot be flexibly adjusted in a modulation and coding process. As a result, an ultra-low coding rate may occur, and a coding loss affects channel capacity allocation.

This application provides a communication method. The method can avoid high operation complexity caused by pre-calculation of a modulation order corresponding to an MCS index by a system, and can improve stability of encoding and decoding performance.

FIG. 5 is a schematic flowchart of a communication method according to an embodiment of this application. The following steps may be included.

501: A first device receives indication information.

The indication information indicates first indexes in a coding strategy set.

It should be understood that the coding strategy set includes first indexes and first values, and the first value is spectral efficiency and/or a quantized value of the spectral efficiency. The coding strategy set includes the plurality of groups of correspondences, and each of the plurality of groups of correspondences is used to describe the first index and the first value.

It should be further understood that the coding strategy set does not include a modulation order.

In an example, the coding strategy set may include one or more entries in the following Table 2.

**Table 2**

| First index | Spectral efficiency x1024 | Spectral efficiency |
|---|---|---|
| 0 | 256 | 0.2500 |
| 1 | 320 | 0.3125 |
| 2 | 400 | 0.3906 |
| 3 | 496 | 0.4844 |
| 4 | 608 | 0.5938 |
| 5 | 736 | 0.7188 |
| 6 | 880 | 0.8594 |
| 7 | 1040 | 1.0156 |
| 8 | 1216 | 1.1875 |
| 9 | 1408 | 1.3750 |
| 10 | 1616 | 1.5781 |
| 11 | 1840 | 1.7969 |
| 12 | 2096 | 2.0469 |
| 13 | 2360 | 2.3047 |
| 14 | 2632 | 2.5703 |
| 15 | 2912 | 2.8438 |
| 16 | 3200 | 3.1250 |
| 17 | 3496 | 3.4141 |
| 18 | 3800 | 3.7109 |
| 19 | 4112 | 4.0156 |
| 20 | 4428 | 4.3242 |
| 21 | 4749 | 4.6367 |
| 22 | 5072 | 4.9531 |
| 23 | 5400 | 5.2734 |
| 24 | 5732 | 5.5977 |
| 25 | 6068 | 2.9258 |
| 26 | 6408 | 6.2578 |

As shown in Table 2, each entry corresponds to one group of correspondences, and each group of correspondences is a correspondence among the first index, the quantization value of the spectral efficiency, and the spectral efficiency.

In another example, the coding strategy set may include one or more entries in the following Table 3.

**Table 3**

| First index | Spectral efficiency x1024 |
|---|---|
| 0 | 256 |
| 1 | 320 |
| 2 | 400 |
| 3 | 496 |
| 4 | 608 |
| 5 | 736 |
| 6 | 880 |
| 7 | 1040 |
| 8 | 1216 |
| 9 | 1408 |
| 10 | 1616 |
| 11 | 1840 |
| 12 | 2096 |
| 13 | 2360 |
| 14 | 2632 |
| 15 | 2912 |
| 16 | 3200 |
| 17 | 3496 |
| 18 | 3800 |
| 19 | 4112 |
| 20 | 4428 |
| 21 | 4749 |
| 22 | 5072 |
| 23 | 5400 |
| 24 | 5732 |
| 25 | 6068 |
| 26 | 6408 |

As shown in Table 3, each entry corresponds to one group of correspondences, and each group of correspondences is a correspondence between the first index and the quantized value of the spectral efficiency.

In still another example, the coding strategy set may include one or more entries in the following Table 4.

**Table 4**

| First index | Spectral efficiency |
|---|---|
| 0 | 0.2500 |
| 1 | 0.3125 |
| 2 | 0.3906 |
| 3 | 0.4844 |
| 4 | 0.5938 |
| 5 | 0.7188 |
| 6 | 0.8594 |
| 7 | 1.0156 |
| 8 | 1.1875 |
| 9 | 1.3750 |
| 10 | 1.5781 |
| 11 | 1.7969 |
| 12 | 2.0469 |
| 13 | 2.3047 |
| 14 | 2.5703 |
| 15 | 2.8438 |
| 16 | 3.1250 |
| 17 | 3.4141 |
| 18 | 3.7109 |
| 19 | 4.0156 |
| 20 | 4.3242 |
| 21 | 4.6367 |
| 22 | 4.9531 |
| 23 | 5.2734 |
| 24 | 5.5977 |
| 25 | 2.9258 |
| 26 | 6.2578 |

As shown in Table 4, each entry corresponds to a group of correspondences, and each group of correspondences is a correspondence between the first index and the spectral efficiency.

Based on the coding strategy set shown in Table 2, Table 3, and Table 4, a specific value of the modulation order is not limited in the coding strategy set in this application. In other words, the modulation order corresponding to the first index and the first value may be any value, and the system does not need to pre-calculate the modulation order corresponding to the first index and the first value.

It should be further understood that Table 2, Table 3, and Table 4 are merely examples of this application. Specific values of the first index, the spectral efficiency, and/or the quantized value of the spectral efficiency are not specifically limited in this application. In Table 2 and Table 3, an example in which the quantized value of the spectral efficiency is spectral efficiency x1024 is used. There may be another calculation method for the quantized value of the spectral efficiency. This is not limited in this application.

502: The first device determines, based on the first index, a first value corresponding to the first index.

It should be understood that the first device obtains, from the coding strategy set based on the first index in the indication information, the first value corresponding to the first index.

503: The first device sends a first codeword.

It should be understood that the first codeword is determined based on a quantity *N_{RE}* of resource elements RE and the first value, and the quantity *N_{RE}* of resource elements is related to a to-be-sent symbol.

In a possible implementation, a quantity of information bits corresponding to the first codeword is related to the quantity *N_{RE}* of resource elements RE and a quantity of streams.

In an example, the quantity of information bits corresponding to the first codeword satisfies: N_{info}=N_{RE}*Rₛ*v, where
N_{RE} represents the quantity of resource elements RE, Rₛ is determined based on R and Qm, R represents a coding rate, Qm represents a quantity of bits in a modulation symbol, and v represents the quantity of streams.

In another possible implementation, the first codeword is determined based on the quantity *N_{RE}* of resource elements RE, the first value, and a second modulation order, and the second modulation order is determined by adjusting a first modulation order M based on a third sequence. The third sequence is determined based on the quantity *N_{RE}* of resource elements RE, a first sequence, and k non-pre-frozen bits. The first sequence corresponds to a quantity N of symbols and the first modulation order M, the quantity *N_{RE}* of resource elements RE is used to pre-freeze bits corresponding to (N-*N_{RE}*) symbols in the first sequence, to obtain a second sequence, and the third sequence is determined by selecting the k non-pre-frozen bits from the second sequence based on an order of reliability from high to low.

It should be understood that the first sequence supports a maximum quantity N of symbols and a maximum modulation order (or referred to as a first modulation order) M. Alternatively, it may be understood that the first sequence corresponds to the quantity N of symbols and the first modulation order M, and a length of the first sequence is N*M.

It should be further understood that the quantity *N_{RE}* of resource elements RE is a quantity of symbols allocated or preset by the system, or a quantity of to-be-sent symbols configured by the system for a network, where *N_{RE}* is a positive integer. *N_{RE}* may be any value, for example, *N_{RE}* is 15, 22, 12, or 6. A specific value of *N_{RE}* is not limited in this application.

It should be further understood that the first device pre-freezes, based on the quantity *N_{RE}* of resource elements RE, bits corresponding to (N-*N_{RE}*) symbols in the first sequence. In other words, information bits cannot be placed in the pre-frozen bits. A sequence obtained by the first device by pre-freezing the bits corresponding to the (N-*N_{RE}*) symbols in the first sequence may be referred to as a second sequence. The second sequence is a sequence obtained by pre-freezing the bits corresponding to the (N-*N_{RE}*) symbols in the first sequence. Further, the first device selects k non-pre-frozen bit positions from the second sequence based on an order of bit reliability from high to low, to obtain the third sequence. The first device modulates the first modulation order M based on the third sequence, to obtain the second modulation order.

The first modulation order is a modulation order corresponding to the first sequence, and the first sequence is a sequence constructed and preset by the system. The second modulation order is used to determine a modulation order of the first codeword, and the second modulation order is determined by adjusting the first modulation order.

In an example, the first device adjusts the first modulation order based on a quantity m of modulation orders occupied by k first bits in the third sequence, to determine the second modulation order.

It is assumed that the third sequence includes M modulation orders, and each of the M modulation orders includes the first bits. In other words, the k information bits are distributed in the M modulation orders in the third sequence, that is, m=M, and M may be used as the second modulation order. It is assumed that the second modulation order is a modulation order of QAM, and a quantity of constellation points of the QAM may be determined based on M. For example, the quantity of constellation points of the QAM satisfies: *A* = 2^{2*M*}; or x modulation orders in the third sequence do not include the first bits, that is, M-x modulation orders include the first bits. In other words, a quantity of modulation orders that include the first bits in the third sequence is m=M-x. It is assumed that the second modulation order is the modulation order of the QAM, and the quantity of constellation points of the QAM may be determined based on m=M-x. For example, the quantity of constellation points of the QAM satisfies: *A* = 2^{2(*M-x*)}.

It should be understood that k information bits correspond to k first bits in the third sequence, and the k first bits are in m modulation orders of the third sequence. m may be used to determine the quantity of constellation points of the modulation scheme (for example, QAM or PAM).

In another example, a quantity of modulation orders of this k first bits in the third sequence is m, the first device determines whether this m modulation orders meet a first condition, adjusts the first modulation order, and determines the second modulation order.

It is assumed that the m modulation orders corresponding to the k first bits in the third sequence do not meet the first condition, and the k first bits correspond to k information bits, where m is less than or equal to M, and m is a positive integer. The first device determines a new sequence, determines, based on the new sequence, whether the first condition is met, until a modulation order corresponding to the new sequence meets the first condition, and then adjusts the first modulation order to the second modulation order of the quantity of modulation orders that meet the first condition.

For example, the m modulation orders corresponding to the k first bits in the third sequence do not meet the first condition, and further, the fourth sequence is determined based on the k information bits and the modulation order m of the third sequence. k second bits in the fourth sequence correspond to m' modulation orders. The m' modulation orders meet the first condition, m' is less than m, and the k second bits are used to carry the k information bits. The first modulation order M is adjusted, and m' is used as the second modulation order.

For another example, the m modulation orders corresponding to the k first bits in the third sequence do not meet the first condition, and the first device determines a fifth sequence based on the k information bits and the modulation order m of the third sequence. k third bits in the fifth sequence are used to carry the k information bits, the k third bits correspond to m'' modulation orders in the fifth sequence, and the m'' modulation orders do not meet the first condition. Further, based on the fifth sequence, bits corresponding to a lowest layer or a highest layer of bit reliability in the m'' modulation orders in the fifth sequence are pre-frozen, to obtain a fourth sequence. k second bits in the fourth sequence correspond to m' modulation orders. The m' modulation orders meet the first condition, m' is less than m", and the k second bits are used to carry the k information bits. The first modulation order M is adjusted, and m' is used as the second modulation order.

It should be understood that the first condition includes: in modulation orders in which the k information bits are located, a quantity of information bits included in each modulation order is greater than or equal to a first threshold; and/or the k information bits are located at bit positions corresponding to a same modulation order.

A value of the first threshold is predefined or preset by the system. This is not limited in this application.

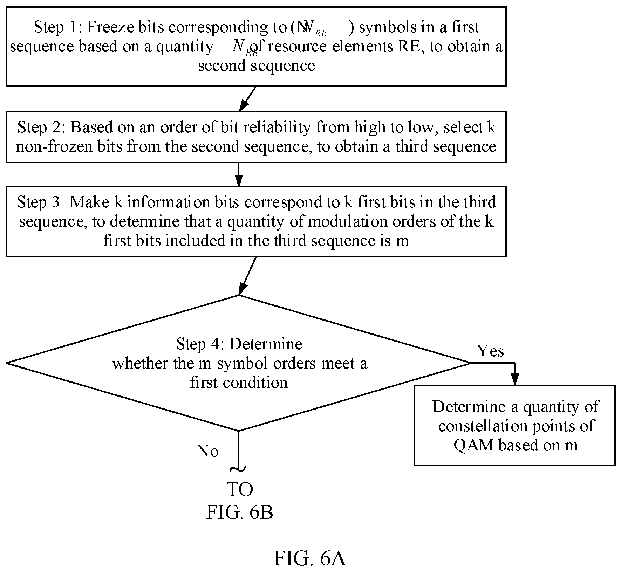

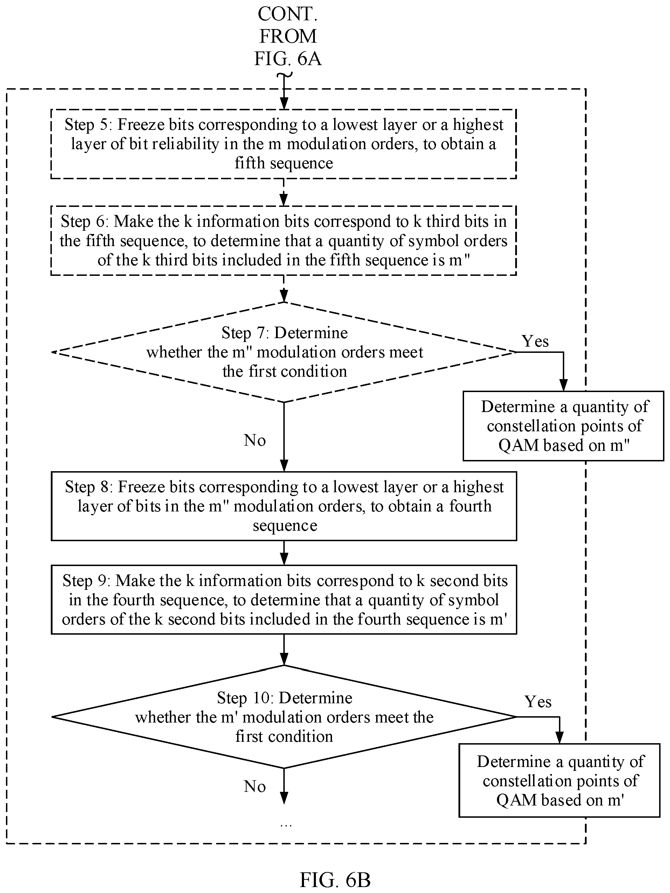

It should be further understood that, for specific descriptions of determining the second modulation order by adjusting the first modulation order according to the first condition, reference may be made to the example description in FIG. 6A and FIG. 6B.

FIG. 6A and FIG. 6B are a schematic flowchart of determining a modulation order according to an embodiment of this application. As shown in FIG. 6A and FIG. 6B, the first device may perform the following steps.

Step 1: Pre-freeze, based on a quantity *N_{RE}* of resource elements RE, bits corresponding to (N-*N_{RE}*) symbols in a first sequence, to obtain a second sequence.

The quantity *N_{RE}* of resource elements RE corresponds to a first symbol quantity n, the quantity *N_{RE}* of resource elements RE is a quantity of resource elements allocated by a system to a to-be-sent symbol, and *N_{RE}* is a positive integer.

The first sequence is a sequence that is preset and constructed by the system. The first sequence supports a maximum quantity N of symbols and a maximum modulation order (or referred to as a first modulation order) M. Alternatively, it may be understood that the first sequence corresponds to the N symbols and the M modulation orders, and a length of the first sequence is N*M.

It should be understood that, the bits corresponding to the (N-*N_{RE}*) symbols in the first sequence are pre-frozen based on the quantity *N_{RE}* of resource elements RE. In other words, information bits cannot be placed in the pre-frozen bits, that is, the second sequence.

Step 2: Select k non-pre-frozen bits from the second sequence based on an order of bit reliability from high to low, to obtain a third sequence.

The selected k non-pre-frozen bits are used to place k information bits, and k is a positive integer. The k information bits are configured by the system, or are configured by the system based on a network requirement. This is not specifically limited in this application.

It should be understood that the k non-pre-frozen bits are selected from the second sequence based on an order of bit reliability from high to low, to obtain the third sequence. The third sequence includes k first bits, and the k first bits are used to place the k information bits. A quantity of modulation orders occupied by the k first bits in the third sequence is m, m≤M, and m is a positive integer.

Step 3: Make the k information bits correspond to the k first bits in the third sequence, to determine that the quantity of modulation orders of the k first bits included in the third sequence is m.

The k information bits correspond to the k first bits in the third sequence, and the k first bits are respectively located at the m modulation orders in the third sequence. In other words, the k first bits are included in bits corresponding to the m modulation orders in the third sequence.

Step 4: Determine whether the m modulation orders meet a first condition.

It is determined whether a ratio of a quantity of first bits in at least one modulation order (for example, a modulation order with lowest reliability) in the m modulation orders to the first symbol quantity n is greater than or equal to a first threshold, and/or whether m is equal to 1.

It should be understood that it is assumed that the third sequence includes four modulation orders: a level 0, a level 1, a level 2, and a level 3, where the level 0 has lowest reliability, and the level 3 has highest reliability. Reliability corresponding to the level 0, the level 1, the level 2, and the level 3 is in ascending order: the level 0<the level 1<the level 2<the level 3. If none of bit positions corresponding to the level 0, the level 1, the level 2, and the level 3 is pre-frozen, quantities of information bits carried in the level 0, the level 1, the level 2, and the level 3 are respectively k0, k1, k2, and k3, that is, k0<k1<k2<k3.

It is assumed that k=11, n=22, and bits corresponding to the level 3 in the third sequence are pre-frozen bits, that is, m=3. Quantities of first bits included in the level 0, the level 1, and the level 2 are respectively 2, 4, and 5. It is assumed that when m=3, the first threshold is 1/28, and a ratio (a coding rate) of a quantity of first bits included in the level 0 in the three modulation orders to n is 1/11. The ratio of the quantity of first bits included in the level 0 to n is greater than the first threshold 1/28. It can be learned that the modulation order m=3 corresponding to the third sequence meets the first condition, that is, m=3 may be used to determine a quantity of constellation points of QAM. The quantity of constellation points of the QAM may satisfy: *A*=2^{2*3}=64. Subsequent steps do not need to be performed.

It is further assumed that k=2, n=22, and the third sequence includes four modulation orders: a level 0, a level 1, a level 2, and a level 3. Bits corresponding to the level 1, the level 0, and the level 3 are pre-frozen bits, that is, m=1. A quantity of first bits included in the level 2 is 2. Because the modulation order of the information bits carried in the third sequence is 1, that is, the first condition is met, the quantity of constellation points of the QAM may satisfy: *A*=2^{2*1}=4 . Subsequent steps do not need to be performed.

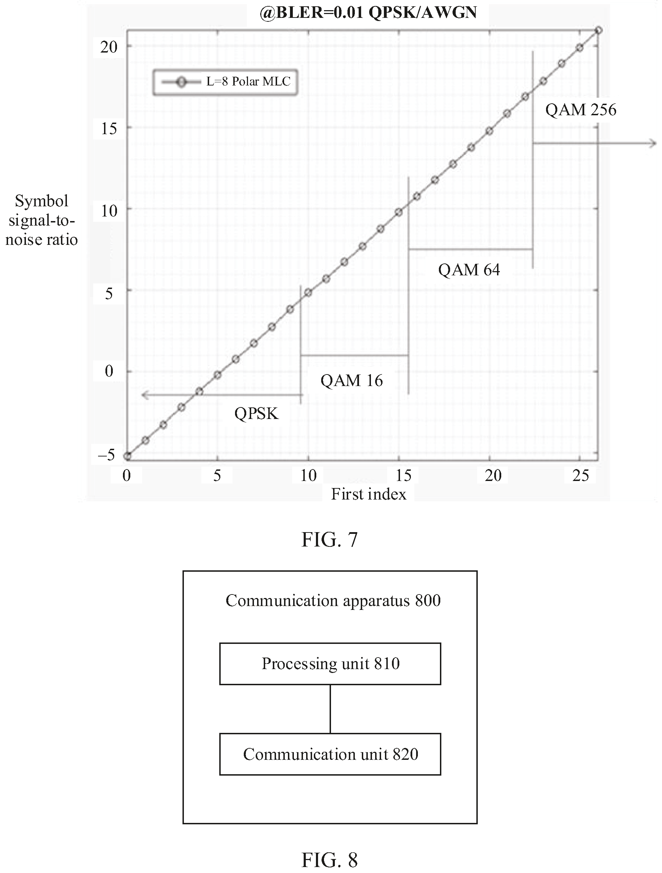

It is further assumed that k=11, n=64, and the third sequence includes four modulation orders: a level 0, a level 1, a level 2, and a level 3. Bits corresponding to the level 3 are pre-frozen bits, that is, m=3. Quantities of first bits included in the level 0, the level 1, and the level 2 are respectively 2, 4, and 5. It is assumed that when m=3, the first threshold is 1/28, and a ratio of the quantity of first bits included in the level 0 in the three modulation orders to n is 1/32. The ratio of the quantity of first bits included in the level 0 to n is less than the first threshold 1/28, and m is not equal to 1. It can be learned that the three modulation orders corresponding to the third sequence do not meet the first condition. Therefore, step 5 and subsequent steps in FIG. 7 are continued to be performed.

It is further assumed that k=13, n=150, and the third sequence includes four modulation orders: a level 0, a level 1, a level 2, and a level 3. In the third sequence, the level 0, the level 1, the level 2, and the level 3 may all be used to carry information bits, that is, m=4. Quantities of first bits included in the level 0, the level 1, the level 2, and the level 3 are respectively 1, 3, 4, and 5. It is assumed that when m=4, the first threshold is 1/140, and a ratio of the quantity of first bits included in the level 0 in the four modulation orders to n is 1/150. The ratio of the quantity of first bits included in the level 0 to n is less than the first threshold 1/140, and m is not equal to 1. It can be learned that the four modulation orders corresponding to the third sequence do not meet the first condition. Therefore, step 5 and subsequent steps in FIG. 7 are continued to be performed.

It is assumed that k=7, n=22, the third sequence includes four modulation orders: a level 0, a level 1, a level 2, and a level 3, and bits corresponding to the level 0 and the level 3 are pre-frozen bits, that is, m=2. Quantities of first bits included in the level 1 and the level 2 are respectively 2 and 5. It is assumed that when m=2, the first threshold is 1/12, and a ratio of the quantity of first bits included in the level 1 in the two modulation orders to n is 1/11. The ratio of the quantity of first bits included in the level 1 to n is greater than the first threshold 1/12. It can be learned that two modulation orders corresponding to the third sequence meet the first condition, that is, the quantity of constellation points of the QAM may be determined based on m=2. The quantity of constellation points of the QAM may satisfy: *A*=2^{2***2}=16. Subsequent steps do not need to be performed.

Step 5: Pre-freeze bits corresponding to a lowest layer or a highest layer of bit reliability in the m modulation orders, to obtain a fifth sequence.

It should be understood that if a quantity of first bits corresponding to at least one of the m modulation orders in the third sequence is less than or equal to the first threshold, the bits corresponding to the lowest layer or the highest layer of bit reliability in the third sequence are pre-frozen, to obtain the fifth sequence.

It is assumed that the third sequence includes four modulation orders: a level 0, a level 1, a level 2, and a level 3. Bits corresponding to the level 0 are bits with lowest bit reliability in the third sequence, and bits corresponding to the level 3 are bits with highest bit reliability in the third sequence. When the quantity of first bits corresponding to at least one modulation order (for example, a modulation order with lowest reliability) in the m modulation orders in the third sequence is less than or equal to the first threshold, the bits corresponding to the level 0 in the third sequence are pre-frozen, to obtain a fourth sequence, or the bits corresponding to the level 3 in the third sequence are pre-frozen, to obtain the fifth sequence.

Step 6: Make the k information bits correspond to k third bits in the fifth sequence, to determine that a quantity of modulation orders that include the k third bits in the fifth sequence is m''.

The fifth sequence is a sequence obtained by pre-freezing bits corresponding to a highest layer or a lowest layer of bit reliability in the third sequence. It is assumed that the fifth sequence includes four modulation orders: a level 0, a level 1, a level 2, and a level 3. Bits corresponding to the level 0 or the level 3 are pre-frozen bits, and information bits cannot be placed.

The k information bits correspond to the k third bits in the fifth sequence, and the k third bits are respectively located in the m'' modulation orders in the fifth sequence. In other words, the k third bits are included in bits corresponding to the m'' modulation orders in the fifth sequence.

Step 7: Determine whether the m'' modulation orders meet the first condition.

It is determined whether a quantity of third bits in at least one modulation order in the m'' modulation orders is greater than or equal to the first threshold, and/or m''=1.

It is assumed that k=9, n=22, and the fifth sequence includes four modulation orders: a level 0, a level 1, a level 2, and a level 3. Bits corresponding to the level 0 and the level 3 are pre-frozen bits, that is, m"=2. Quantities of third bits included in the level 1 and the level 2 are respectively 4 and 5. It is assumed that when the modulation order is 2, the first threshold is 1/12, and in the level 1 and the level 2 in the two modulation orders, a ratio of the quantity of third bits included in level 1 to n is 1/11. The ratio of the quantity of third bits included in the level 1 to n is greater than the first threshold 1/12. It can be learned that two modulation orders corresponding to the fifth sequence meet the first condition, that is, the quantity of constellation points of the QAM may be determined based on m"=2. The quantity of constellation points of the QAM may satisfy: *A*=2^{2***2}=16. Subsequent steps do not need to be performed.

It is further assumed that k=2, n=6, and the fifth sequence includes four modulation orders: a level 0, a level 1, a level 2, and a level 3. Bits corresponding to the level 1, the level 3, and the level 2 are pre-frozen bits, that is, m"=1. A quantity of third bits included in the level 1 is 2. The level 1 in the fifth sequence includes two third bits. Because m"=1, the m" modulation orders corresponding to the fifth sequence meet the first condition. The quantity of constellation points of the QAM may satisfy: *A*=2^{2*1}=4. Subsequent steps do not need to be performed.

It is further assumed that k=8, n=48, and the fifth sequence includes four modulation orders: a level 0, a level 1, a level 2, and a level 3. Bits corresponding to the level 0 and the level 3 are pre-frozen bits, that is, m"=2. Quantities of third bits included in the level 1 and the level 2 are respectively 3 and 5. It is assumed that when m"=2, the first threshold is 1/12, and a ratio of the quantity of third bits included in the level 1 in the two modulation orders to n is 3/48. The ratio of the quantity of third bits included in the level 1 to n is less than the first threshold 1/12, and m" is not equal to 1. It can be learned that the two modulation orders corresponding to the fifth sequence do not meet the first condition. Therefore, step 8 and subsequent steps in FIG. 7 are continued to be performed.

Step 8: Pre-freeze bits corresponding to a lowest layer or a highest layer of bit reliability in the m" modulation orders, to obtain a fourth sequence.

It should be understood that if a quantity of first bits corresponding to at least one of the m'' modulation orders in the fifth sequence is less than the first threshold, the bits corresponding to the lowest layer or the highest layer of bit reliability in the fifth sequence are pre-frozen, to obtain the fourth sequence.

It is assumed that the fifth sequence includes four modulation orders: a level 0, a level 1, a level 2, and a level 3. In step 5, the bits corresponding to the level 0 in the third sequence are pre-frozen, to obtain the fifth sequence. Bits corresponding to the level 0 in the fifth sequence are pre-frozen bits. In this case, bits corresponding to the level 1 are bits with lowest reliability in the fifth sequence, and bits corresponding to the level 3 are bits with highest reliability in the fifth sequence. When a ratio of a quantity of third bits corresponding to a modulation order with lowest reliability in the m'' modulation orders in the fifth sequence to the first symbol quantity n is less than the first threshold, the bits corresponding to the level 1 in the fifth sequence are pre-frozen, to obtain the fourth sequence, or the bits corresponding to the level 3 in the fifth sequence are pre-frozen, to obtain the fourth sequence.

It may be understood that step 8 is similar to step 5. Details are not described herein again.

Step 9: Make the k information bits correspond to k second bits in the fourth sequence, to determine that a quantity of modulation orders that include the k second bits in the fourth sequence is m'.

The fourth sequence is a sequence obtained by pre-freezing the bits corresponding to the highest layer or the lowest layer of bit reliability in the fifth sequence. It is assumed that the fourth sequence includes four modulation orders: a level 0, a level 1, a level 2, and a level 3. In step 5, the bits corresponding to the level 0 are pre-frozen, and information bits cannot be placed. In step 8, the bits corresponding to the level 1 or the level 3 may be pre-frozen, and information bits cannot be placed.

The k information bits correspond to the k second bits in the fourth sequence, and the k second bits are respectively located at m' modulation orders in the fourth sequence. In other words, the k second bits are included in bits corresponding to the m' modulation orders in the fourth sequence.

Step 10: Determine whether the m' modulation orders meet the first condition.

It is determined whether a ratio of a quantity of second bits in a modulation order with lowest reliability in the m' modulation orders to the first symbol quantity n is greater than or equal to the first threshold, and/or whether m' is equal to 1.

It is assumed that k=9, n=22, and the fourth sequence includes four modulation orders: a level 0, a level 1, a level 2, and a level 3. Bits corresponding to the level 0 and the level 3 are pre-frozen bits, that is, m'=2. Quantities of second bits included in the level 1 and the level 2 are respectively 4 and 5. It is assumed that when m'=2, the first threshold is 1/12, and a ratio of a quantity of first bits included in the level 1 in the two modulation orders to n is 2/11. A ratio of a quantity of second bits included in the level 1 in the two modulation orders to n is greater than the first threshold 1/12. It can be learned that two modulation orders corresponding to the fourth sequence meet the first condition, that is, the quantity of constellation points of the QAM is determined based on m'=2. The quantity of constellation points of the QAM may satisfy: *A*=2^{2*2}=16 . Subsequent steps do not need to be performed.

It is further assumed that k=2, n=22, and the fourth sequence includes four modulation orders: a level 0, a level 1, a level 2, and a level 3. Bits corresponding to the level 0, the level 1, and the level 3 are pre-frozen bits, that is, m'=1. A quantity of second bits included in the level 2 is 2. Because m'=1, there is no need to determine a relationship between the first threshold and a ratio of the quantity of second bits corresponding to the level 2 to the first symbol quantity n. One modulation order corresponding to the fourth sequence meets the first condition. The quantity of constellation points of the QAM may satisfy: *A*=2^{2*1}=4 . Subsequent steps do not need to be performed.

It is further assumed that k=8, n=45, and the fourth sequence includes four modulation orders: a level 0, a level 1, a level 2, and a level 3. Bits corresponding to the level 0 and the level 1 are pre-frozen bits, that is, m'=2. Quantities of second bits included in the level 2 and the level 3 are respectively 3 and 5. It is assumed that when m'=2, the first threshold is 1/12, and a ratio of the quantity of second bits included in the level 2 in the two modulation orders to n is 1/15. If the ratio of the quantity of second bits included in the level 2 to n is less than the first threshold 1/12, and m' is not equal to 1, steps similar to step 5 to step 7 or step 8 to step 10 in FIG. 7 are continued to be performed, to further determine the quantity of constellation points of the QAM.

It is further assumed that k=6, n=33, and the fourth sequence includes four modulation orders: a level 0, a level 1, a level 2, and a level 3. Bits corresponding to the level 2 and the level 3 are pre-frozen bits, that is, m'=2. Quantities of second bits included in the level 0 and the level 1 are respectively 2 and 4. It is assumed that when m'=2, the first threshold is 1/12, and a ratio of a quantity of second bits included in the level 0 in the two modulation orders to n is 2/33. The ratio of the quantity of second bits included in the level 0 to n is less than the first threshold 1/12. It can be learned that the two modulation orders corresponding to the third sequence do not meet the first condition, and m''=2 and is not equal to 1. In this case, steps similar to step 5 to step 7 or step 8 to step 10 in FIG. 7 are continued to be performed, to further determine the quantity of constellation points of the QAM.

It should be understood that, as shown in FIG. 6A and FIG. 6B, the second modulation order used to determine the first codeword is determined by the first device. Whether bit positions corresponding to the highest layer or the lowest layer of bit reliability in the sequence need to be pre-frozen is determined based on the first condition and a modulation order in which the bit positions carrying the information bits are located, the information bits are made correspond to non-pre-frozen bit positions, and the first modulation order is adjusted to obtain the second modulation order, where information bits included at each coding layer corresponding to the second modulation order meet a specific condition (for example, the first condition). Therefore, the system does not need to pre-calculate the modulation order, and the first device can determine an appropriate modulation order, to avoid a case in which channel capacity allocation is affected by a coding loss caused by an ultra-low coding rate in a coding and modulation process.

According to FIG. 5 and FIG. 6A and FIG. 6B, the coding strategy set in this application includes correspondences between first indexes and first values. When a to-be-sent symbol is encoded and modulated, the modulation order is adaptively determined by the first device, and does not need to be pre-calculated by the system and configured for the first device. The first device can determine the appropriate modulation order based on the to-be-sent symbol, to avoid a case in which the ultra-low coding rate occurs when an existing MCS is used and the coding loss affects the channel capacity allocation. In addition, according to the method provided in this application, the system does not need to pre-calculate the modulation order, thereby reducing calculation complexity of the system.

The foregoing describes in detail the method provided in this application. For example, the following provides, according to the method provided in this application, a relationship between a first index and a symbol signal-to-noise ratio when a block error rate of a data packet is 1%, with reference to data of the coding strategy set provided in Table 2.

FIG. 7 is a diagram of simulation of BLER=0.01.

It should be understood that FIG. 7 shows a simulation experiment based on a specific example of the coding strategy set provided in this application in Table 2. In FIG. 7, a horizontal coordinate represents the first index in Table 2, and a vertical coordinate represents a symbol signal-to-noise ratio. It can be seen that there is a linear relationship between the first index and the symbol signal-to-noise ratio. That is, as the first index increases, the symbol signal-to-noise ratio increases steadily. The symbol signal-to-noise ratio changes at an equal interval as the first index changes. It can be learned that overall performance of a system is stable.

According to the diagram of simulation shown in FIG. 7, a first device can adaptively determine a modulation order of QAM, and based on the coding strategy set provided in this application, the symbol signal-to-noise ratio increases at the equal interval as the first index increases at the equal interval, thereby ensuring stable system performance and stable encoding and decoding performance.

It may be understood that the steps in the foregoing accompanying drawings are merely examples for description, and these are not strictly limited. In addition, sequence numbers of the foregoing processes do not mean execution sequences. The execution sequences of the processes need to be determined based on functions and internal logic of the processes, and should not constitute any limitation on the implementation processes of embodiments of this application.

It may be further understood that some coding sequence names in embodiments of this application do not limit the protection scope of embodiments of this application.

It may be further understood that some optional features in embodiments of this application may be independent of other features in some scenarios, or may be combined with other features in some scenarios. This is not limited.

It can also be understood that in the foregoing method embodiments, the methods and operations implemented by the first device may be alternatively implemented by a component (for example, a chip or a circuit) of the first device. This is not limited.

In correspondence to the method provided in the foregoing method embodiments, an embodiment of this application further provides a corresponding apparatus. The apparatus includes a corresponding module configured to perform the foregoing method embodiments. The modules may be software, hardware, or a combination of software and hardware. It may be understood that the technical features described in the method embodiments are also applicable to the following apparatus embodiments.

FIG. 8 is a block diagram of a communication apparatus 800 according to this application. As shown in FIG. 8, the communication apparatus 800 includes a processing unit 810 and a communication unit 820. The communication unit is also referred to as a transceiver unit. The apparatus 800 may implement steps or procedures performed by the first device in the foregoing method embodiments. The processing unit 810 is configured to perform processing-related operations of the first device in the foregoing method embodiments, and the communication unit 820 is configured to perform sending-related operations of the first device in the foregoing method embodiments. For example, the units of the communication apparatus 800 are configured to implement the following functions.

The communication unit 820 is configured to receive indication information, where the indication information indicates first indexes in a coding strategy set, the coding strategy set includes first indexes and first values, the coding strategy set includes a plurality of groups of correspondences, each of the plurality of groups of correspondences is used to describe the first index and the first value, and the first value is spectral efficiency and/or a quantized value of the spectral efficiency. The processing unit 810 is configured to determine, based on the first index, the first value corresponding to the first index. The communication unit 820 is further configured to send a first codeword, where the first codeword is determined based on a quantity *N_{RE}* of resource elements RE and the first value, and the quantity *N_{RE}* of resource elements is related to a to-be-sent symbol.

In embodiments in which the communication apparatus 800 corresponds to a transmitter, the processing unit 810 is configured to perform processing and/or an operation, other than sending and receiving actions, implemented inside the first device. The communication unit 820 is configured to perform a receiving (or input) action of the first device, and/or configured to perform a sending (or output) action of the first device.

It should be understood that the apparatus 800 herein is presented in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function.

The apparatus 800 in each of the foregoing solutions has a function of implementing corresponding steps performed by the first device in the foregoing methods. The function may be implemented by hardware, or may be implemented by executing corresponding software by hardware. The hardware or software includes one or more modules corresponding to the foregoing function. For example, the communication unit may be replaced with a transceiver (for example, a sending unit in the communication unit may be replaced with a transmitter, and a receiving unit in the communication unit may be replaced with a receiver), and another unit such as the processing unit may be replaced with a processor, to separately perform the sending/receiving operations and the processing-related operations in the method embodiments.

In addition, alternatively, the communication unit may be a transceiver circuit (for example, may include a receiving circuit and a sending circuit), and the processing unit may be a processing circuit. In this embodiment of this application, the apparatus 800 may be the first device in the foregoing embodiments, or may be a chip or a chip system, for example, a system on chip (system on chip, SoC). The communication unit may be an input/output circuit or a communication interface. The processing unit is a processor, a microprocessor, or an integrated circuit integrated on the chip. This is not limited herein.

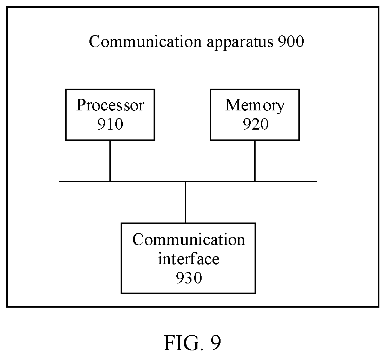

FIG. 9 is a diagram of a structure of a communication apparatus 900 according to this application. As shown in FIG. 9, a communication apparatus 900 includes one or more processors 910, one or more memories 920, and one or more communication interfaces 930. The processor 910 is configured to control the communication interface 930 to receive and transmit signals. The memory 920 is configured to store a computer program. The processor 910 is configured to invoke the computer program from the memory 920 and run the computer program, so that the communication apparatus 800 performs processing performed by the transmitter or the receiver in the method embodiments of this application.

For example, the processor 910 may have a function of the processing unit 810 shown in FIG. 8, and the communication interface 930 may have a function of the communication unit 820 shown in FIG. 8. Specifically, the processor 910 may be configured to perform processing or operations performed inside the communication apparatus, and the communication interface 930 is configured to perform a sending and/or receiving operation performed by the communication apparatus.

Optionally, the memory and the processor in each of the foregoing apparatus embodiments may be units physically independent of each other, or the memory may be integrated with the processor. This is not limited in this application.

In addition, this application further provides a computer-readable storage medium. The computer-readable storage medium stores computer instructions. When the computer instructions are run on a computer, an operation and/or processing performed by the first device in the method embodiments of this application are/is performed.

In addition, this application further provides a computer program product. The computer program product includes computer program code or instructions. When the computer program code or the instructions is/are run on a computer, an operation and/or processing performed by the first device in the method embodiments of this application are/is performed.

In addition, this application further provides a chip. The chip includes a processor. A memory configured to store a computer program is disposed independent of the chip. The processor is configured to execute the computer program stored in the memory, to enable an apparatus in which the chip is installed to perform an operation and/or processing performed by the first device in any one of the method embodiments.

Further, the chip may include a communication interface. The communication interface may be an input/output interface, an interface circuit, or the like. Further, the chip may include the memory.

Optionally, there may be one or more processors, there may be one or more memories, and there may be one or more memories.

In addition, this application further provides a communication apparatus (for example, a chip or a chip system), including a processor and a communication interface. According to an operation and/or processing performed by the first device in any one of the foregoing method embodiments, the communication interface is configured to receive (or referred to as input) a to-be-encoded message bit, and the processor encodes the to-be-encoded message bit. Optionally, the communication interface is further configured to send (or referred to as output) data and/or information processed by the processor.

In addition, this application further provides a communication apparatus, including at least one processor. The at least one processor is coupled to at least one memory. The at least one processor is configured to execute a computer program or instructions stored in the at least one memory, to enable the communication apparatus to perform an operation and/or processing performed by the first device in any one of the method embodiments.

In addition, this application further provides a communication system, including the first device in the method embodiments of this application.

The memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limitative description, RAMs in many forms are available, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DRRAM). It should be noted that the memory of the systems and methods described in this specification includes but is not limited to these and any memory of another appropriate type.

The entirety or a part of the method provided in the foregoing embodiments may be implemented by software, hardware, firmware, or any combination thereof. When software is used to implement embodiments, all or a part of the embodiments may be implemented in a form of a computer program product. The computer program product may include one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media.

To clearly describe the technical solutions in embodiments of this application, numbers such as "first" and "second" are used in embodiments of this application to distinguish between same items or similar items that provide basically same functions. A person skilled in the art may understand that the numbers such as "first" and "second" do not limit the number and an execution sequence, and the words such as "first" and "second" do not necessarily indicate a definite difference.

In embodiments of this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatuses, and methods may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

## Claims

1. A communication method, comprising:
receiving indication information, wherein the indication information indicates first indexes in a coding strategy set, the coding strategy set comprises the first indexes and first values, the coding strategy set comprises a plurality of groups of correspondences, each of the plurality of groups of correspondences is used to describe the first index and the first value, and the first value is spectral efficiency and/or a quantized value of the spectral efficiency;
determining, based on the first index, the first value corresponding to the first index; and
sending a first codeword, wherein the first codeword is determined based on a quantity *N_{RE}* of resource elements RE and the first value, and the quantity *N_{RE}* of resource elements RE is related to a to-be-sent symbol.

2. The method according to claim 1, wherein a quantity of information bits corresponding to the first codeword is related to the quantity *N_{RE}* of resource elements RE and a quantity of streams.

3. The method according to claim 2, wherein the quantity of information bits corresponding to the first codeword satisfies:${N}_{info} {= N}_{RE} ∗ {R}_{s} ∗ v ,$ wherein N_{RE} represents the quantity of resource elements RE, Rₛ is determined based on R and Qm, R represents a coding rate, Qm represents a quantity of bits in a modulation symbol, and v represents the quantity of streams.

4. The method according to any one of claims 1 to 3, wherein that the first codeword is determined based on the quantity *N_{RE}* of resource elements RE and the first value comprises:
the first codeword is determined based on the quantity *N_{RE}* of resource elements RE, the first value, and a second modulation order, the second modulation order is determined by adjusting a first modulation order M based on a third sequence, and the third sequence is determined based on the quantity *N_{RE}* of resource elements RE, a first sequence, and k non-pre-frozen bits, wherein
the first sequence corresponds to a quantity N of symbols and the first modulation order M, the quantity *N_{RE}* of resource elements RE is used to pre-freeze bits corresponding to (N-*N_{RE}*) symbols in the first sequence, to obtain a second sequence, and the third sequence is determined by selecting the k non-pre-frozen bits from the second sequence based on an order of reliability from high to low.

5. The method according to claim 4, wherein that the second modulation order is determined by adjusting the first modulation order M based on the third sequence comprises:
m modulation orders corresponding to k first bits in the third sequence do not meet a first condition, the second modulation order is m' modulation orders, the m' modulation orders are modulation orders corresponding to k second bits in a fourth sequence, and the m' modulation orders meet the first condition, wherein
the fourth sequence is determined based on the k information bits and m, the k second bits correspond to the k information bits, m' is less than m, the k first bits correspond to the k information bits, m is less than or equal to M, and m is a positive integer.

6. The method according to claim 5, wherein that the fourth sequence is determined based on the k information bits and m comprises:
the fourth sequence is obtained by pre-freezing bits corresponding to a lowest layer or a highest layer of bit reliability in m'' modulation orders in a fifth sequence, the fifth sequence is determined based on the k information bits and m, k third bits in the fifth sequence correspond to the k information bits, the k third bits correspond to the m'' modulation orders, and the m'' modulation orders do not meet the first condition, wherein
m'' is less than M, and m'' is a positive integer.

7. The method according to claim 5 or 6, wherein the first condition comprises:
in modulation orders in which the k information bits are located, a quantity of information bits comprised in each modulation order is greater than or equal to a first threshold; and/or
the k information bits are located at bit positions corresponding to a same modulation order.

8. The method according to claim 4, wherein that the second modulation order is determined by adjusting the first modulation order M based on the third sequence comprises:
m modulation orders corresponding to k first bits in the third sequence meet a first condition, and the second modulation order is the m modulation orders, wherein
the k first bits correspond to the k information bits, m is less than M, m is a positive integer, and the first condition comprises: in modulation orders in which the k information bits are located, a quantity of information bits comprised in each modulation order is greater than or equal to a first threshold; and/or the k information bits are located at bit positions corresponding to a same modulation order.

9. The method according to any one of claims 4 to 8, wherein
when the first modulation order M is a modulation order of first quadrature amplitude modulation QAM, the first modulation order M is used to determine a quantity of constellation points of the first QAM, wherein the quantity of constellation points of the first QAM satisfies: *A* = 2^{2*M*}; and
when the second modulation order is a modulation order of second QAM, the second modulation order is used to determine a quantity of constellation points of the second QAM, and the quantity of constellation points of the second QAM satisfies: *a* = 2^{2∗the second modulation order}.

10. The method according to any one of claims 1 to 9, wherein the plurality of groups of correspondences comprised in the coding strategy set correspond to one or more of the following entries:
| First index | Spectral efficiency x1024 | Spectral efficiency |
|---|---|---|
| 0 | 256 | 0.2500 |
| 1 | 320 | 0.3125 |
| 2 | 400 | 0.3906 |
| 3 | 496 | 0.4844 |
| 4 | 608 | 0.5938 |
| 5 | 736 | 0.7188 |
| 6 | 880 | 0.8594 |
| 7 | 1040 | 1.0156 |
| 8 | 1216 | 1.1875 |
| 9 | 1408 | 1.3750 |
| 10 | 1616 | 1.5781 |
| 11 | 1840 | 1.7969 |
| 12 | 2096 | 2.0469 |
| 13 | 2360 | 2.3047 |
| 14 | 2632 | 2.5703 |
| 15 | 2912 | 2.8438 |
| 16 | 3200 | 3.1250 |
| 17 | 3496 | 3.4141 |
| 18 | 3800 | 3.7109 |
| 19 | 4112 | 4.0156 |
| 20 | 4428 | 4.3242 |
| 21 | 4749 | 4.6367 |
| 22 | 5072 | 4.9531 |
| 23 | 5400 | 5.2734 |
| 24 | 5732 | 5.5977 |
| 25 | 6068 | 2.9258 |
| 26 | 6408 | 6.2578 |

11. A communication apparatus, comprising:
a transceiver unit, configured to receive indication information, wherein the indication information indicates first indexes in a coding strategy set, the coding strategy set comprises the first indexes and first values, the coding strategy set comprises a plurality of groups of correspondences, each of the plurality of groups of correspondences is used to describe the first index and the first value, and the first value is spectral efficiency and/or a quantized value of the spectral efficiency; and
a processing unit, configured to determine, based on the first index, the first value corresponding to the first index, wherein
the transceiver unit is further configured to send a first codeword, wherein the first codeword is determined based on a quantity *N_{RE}* of resource elements RE and the first value, and the quantity *N_{RE}* of resource elements RE is related to a to-be-sent symbol.

12. The apparatus according to claim 11, wherein a quantity of information bits corresponding to the first codeword is related to the quantity *N_{RE}* of resource elements RE and a quantity of streams.

13. The apparatus according to claim 12, wherein the quantity of information bits corresponding to the first codeword satisfies: ${N}_{info} = {N}_{RE} * {R}_{s} * v ,$ wherein
N_{RE} represents the quantity of resource elements RE, Rₛ is determined based on R and Qm, R represents a coding rate, Qm represents a quantity of bits in a modulation symbol, and v represents the quantity of streams.

14. The apparatus according to any one of claims 11 to 13, wherein that the first codeword is determined based on the quantity *N_{RE}* of resource elements RE and the first value comprises:
the first codeword is determined based on the quantity *N_{RE}* of resource elements RE, the first value, and a second modulation order, the second modulation order is determined by adjusting a first modulation order M based on a third sequence, and the third sequence is determined based on the quantity *N_{RE}* of resource elements RE, a first sequence, and k non-pre-frozen bits, wherein
the first sequence corresponds to a quantity N of symbols and the first modulation order M, the quantity *N_{RE}* of resource elements RE is used to pre-freeze bits corresponding to (N-*N_{RE}*) symbols in the first sequence, to obtain a second sequence, and the third sequence is determined by selecting the k non-pre-frozen bits from the second sequence based on an order of reliability from high to low.

15. The apparatus according to claim 14, wherein that the second modulation order is determined by adjusting the first modulation order M based on the third sequence comprises:
m modulation orders corresponding to k first bits in the third sequence do not meet a first condition, the second modulation order is m' modulation orders, the m' modulation orders are modulation orders corresponding to k second bits in a fourth sequence, and the m' modulation orders meet the first condition, wherein
the fourth sequence is determined based on the k information bits and m, the k second bits correspond to the k information bits, m' is less than m, the k first bits correspond to the k information bits, m is less than or equal to M, and m is a positive integer.

16. The apparatus according to claim 15, wherein that the fourth sequence is determined based on the k information bits and m comprises:
the fourth sequence is obtained by pre-freezing bits corresponding to a lowest layer or a highest layer of bit reliability in m'' modulation orders in a fifth sequence, the fifth sequence is determined based on the k information bits and m, k third bits in the fifth sequence correspond to the k information bits, the k third bits correspond to the m'' modulation orders, and the m'' modulation orders do not meet the first condition, wherein
m'' is less than M, and m'' is a positive integer.

17. The apparatus according to claim 15 or 16, wherein the first condition comprises:
in modulation orders in which the k information bits are located, a quantity of information bits comprised in each modulation order is greater than or equal to a first threshold; and/or
the k information bits are located at bit positions corresponding to a same modulation order.

18. The apparatus according to claim 14, wherein that the second modulation order is determined by adjusting the first modulation order M based on the third sequence comprises:
m modulation orders corresponding to k first bits in the third sequence meet a first condition, and the second modulation order is the m modulation orders, wherein
the k first bits correspond to the k information bits, m is less than M, m is a positive integer, and the first condition comprises: in modulation orders in which the k information bits are located, a quantity of information bits comprised in each modulation order is greater than or equal to a first threshold; and/or the k information bits are located at bit positions corresponding to a same modulation order.

19. The apparatus according to any one of claims 14 to 18, wherein
when the first modulation order M is a modulation order of first quadrature amplitude modulation QAM, the first modulation order M is used to determine a quantity of constellation points of the first QAM, wherein the quantity of constellation points of the first QAM satisfies: *A* = 2^{2*M*}; and
when the second modulation order is a modulation order of second QAM, the second modulation order is used to determine a quantity of constellation points of the second QAM, and the quantity of constellation points of the second QAM satisfies: *a* = 2^{2∗the second modulation order}.

20. The apparatus according to any one of claims 11 to 19, wherein the plurality of groups of correspondences comprised in the coding strategy set correspond to one or more of the following entries:
| First index | Spectral efficiency x1024 | Spectral efficiency |
|---|---|---|
| 0 | 256 | 0.2500 |
| 1 | 320 | 0.3125 |
| 2 | 400 | 0.3906 |
| 3 | 496 | 0.4844 |
| 4 | 608 | 0.5938 |
| 5 | 736 | 0.7188 |
| 6 | 880 | 0.8594 |
| 7 | 1040 | 1.0156 |
| 8 | 1216 | 1.1875 |
| 9 | 1408 | 1.3750 |
| 10 | 1616 | 1.5781 |
| 11 | 1840 | 1.7969 |
| 12 | 2096 | 2.0469 |
| 13 | 2360 | 2.3047 |
| 14 | 2632 | 2.5703 |
| 15 | 2912 | 2.8438 |
| 16 | 3200 | 3.1250 |
| 17 | 3496 | 3.4141 |
| 18 | 3800 | 3.7109 |
| 19 | 4112 | 4.0156 |
| 20 | 4428 | 4.3242 |
| 21 | 4749 | 4.6367 |
| 22 | 5072 | 4.9531 |
| 23 | 5400 | 5.2734 |
| 24 | 5732 | 5.5977 |
| 25 | 6068 | 2.9258 |
| 26 | 6408 | 6.2578 |

21. A communication apparatus, comprising at least one processor, wherein the at least one processor is coupled to at least one memory, and the at least one processor is configured to execute a computer program or instructions stored in the at least one memory, to enable the communication apparatus to perform the method according to any one of claims 1 to 10.

22. A chip, comprising a processor and a communication interface, wherein the communication interface is configured to: receive a to-be-encoded sequence, and send the to-be-encoded sequence to the processor, and the processor performs the method according to any one of claims 1 to 10.

23. A computer-readable storage medium, wherein the computer-readable storage medium stores computer instructions, and when the computer instructions are run on a computer, the method according to any one of claims 1 to 10 is implemented.

24. A computer program product, wherein the computer program product comprises computer program code, and when the computer program code is run on a computer, the method according to any one of claims 1 to 10 is implemented.
